# FASCICULE DE BREVET EUROPEEN

(11) **EP 1 426 663 B1**
(45) Date de publication et mention de la délivrance du brevet: **12.04.2006**
(21) Numéro de dépôt: 02080030.6
(22) Date de dépôt: 02.12.2002
(51) Int. Cl.: F16K 1/30, F16K 35/02, F16K 31/60

(54) **Robinet et coiffe de protection pour bouteille de gaz**
Ventil und Schutzgehäuse für Druckflaschen
Valve and protective cover for pressure bottle

(43) Date de publication de la demande: 09.06.2004
(73) Titulaire: LUXEMBOURG PATENT COMPANY S.A., 7440 Lintgen (LU)
(72) Inventeur: Kremer, Paul, 7263 Walferdange (LU); Muzzo, Paul, 57650 Fontoy (FR); Risse, Claude, 57310 Bertrange (FR)
(74) Mandataire: Weydert, Robert

(56) Documents cités:
- EP-A- 0 747 796
- WO-A-90/07670
- DE-A- 3 220 659
- FR-A- 2 774 452
- US-A- 3 035 605
- US-A- 5 183 073

## Description

L'invention concerne un ensemble comportant un robinet/détendeur et une coiffe de protection pour le robinet/détendeur, à monter sur le col d'une bouteille de gaz de sorte que la coiffe entoure et protège le robinet/détendeur, le robinet/détendeur ayant une vanne ouverte-fermée équipée d'un levier de commande pivotant relié à un organe de commande de la vanne et pouvant être abrité à l'intérieur de la coiffe pourvue d'au moins une découpe d'accès ou d'observation.

Un tel ensemble est divulgué dans le brevet EP 0 747 796, selon ce brevet européen antérieur le levier de commande de la vanne est mobile dans une fente verticale de la coiffe. Le levier peut être pivoté de sa position abritée à l'intérieur de la coiffe par la seule application, éventuellement involontaire, d'une force au levier de commande en vue de le pivoter. La présente invention a pour objet de remédier à ce désavantage et de fournir un ensemble du type cité ci-avant dans lequel la seule application d'une force au levier de commande en vue de le pivoter ne peut pas causer son mouvement de sa position abritée à l'intérieur de la coiffe vers l'extérieur de celle-ci.

Selon la présente invention, pour résoudre ce problème de l'invention, l'ensemble robinet/détendeur et coiffe de protection est caractérisé en ce que le levier de commande est un levier à longueur variable qui peut être raccourci manuellement en vue de le pivoter par la découpe pratiquée dans la coiffe vers une position abritée à l'intérieur de la coiffe et de cette position abritée vers une position dans laquelle il s'étend vers l'extérieur de la coiffe, le levier ayant une longueur maximale à l'état non-raccourcie choisie de sorte que la paroi de la coiffe entourant la découpe empêche le mouvement pivotant du levier vers l'intérieur de la coiffe et vers l'extérieur de celle-ci lorsque le levier de commande est à sa longueur maximale.

Selon un mode d'exécution avantageux de l'invention le levier de commande est raccordé à l'organe de commande de la vanne du robinet/détendeur par un moyen de mouvement à vide de sorte que le mouvement pivotant du levier de commande pendant une première phase de mouvement du levier de sa position abritée à l'intérieur de la coiffe vers l'extérieur de celle-ci n'actionne pas l'organe de commande de la vanne et actionne cet organe de commande lorsque le mouvement pivotant du levier continue.

Selon un autre mode d'exécution avantageux de l'invention le levier est un levier télescopique équipé d'un ressort arrangé afin de maintenir le levier normalement à sa longueur maximale et le moyen de mouvement à vide reliant le levier à l'organe de commande de la vanne est un mécanisme comportant une goupille fixée au levier ou à l'organe de commande et mobile dans une rainure allongée pratiquée dans l'autre de ces pièces.

L'invention sera maintenant expliquée en plus grand détail en référence aux dessins annexés sur lesquels
la figure 1 est une vue en perspective de l'ensemble de la présente invention, montrant la coiffe de protection montée sur le col d'une bouteille de gaz (dont seulement la partie supérieure est représentée) et abritant le robinet/détendeur (indiqué schématiquement) avec son levier de commande présentant sa longueur maximale et se trouvant à l'intérieur de la coiffe de protection ;
la figure 2 est une vue semblable à la figure 1, mais avec le levier de commande raccourci (comprimé axialement) en vue de pouvoir le pivoter vers l'extérieur de la coiffe ;
la figure 3 est une vue de côté de l'ensemble de la figure 1 montée sur le col d'une bouteille de gaz avec le levier de commande pivoté vers l'extérieur de la coiffe jusqu'à une position intermédiaire sans actionner la vanne du robinet/détendeur ;
la figure 4 est une vue semblable à la figure 2, mais avec le levier de commande pivoté davantage en vue d'ouvrir la vanne du robinet/détendeur ;
la figure 5 est une vue en coupe longitudinale du levier télescopique;
la figure 6 est une vue schématique du levier de commande et de son raccordement à la vanne du robinet/détendeur, avec le levier de commande en position verticale (dans laquelle il est abrité dans la coiffe (non-représentée dans cette figure) et la vanne en position fermée ;
la figure 7 est une vue semblable à la figure 6, mais avec le levier de commande se trouvant dans la position intermédiaire de la figure 3 et la vanne en position fermée; et
la figure 8 est aussi une vue semblable à la figure 6, mais avec le levier de commande se trouvant dans la position de la figure 4 et la vanne en position ouverte, dégagée de son siège.

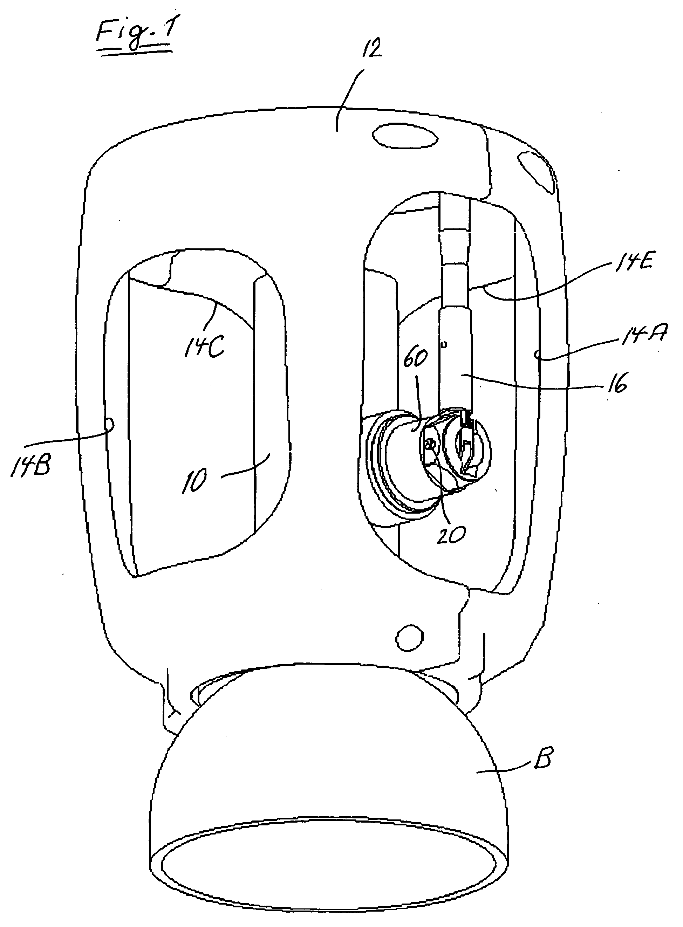

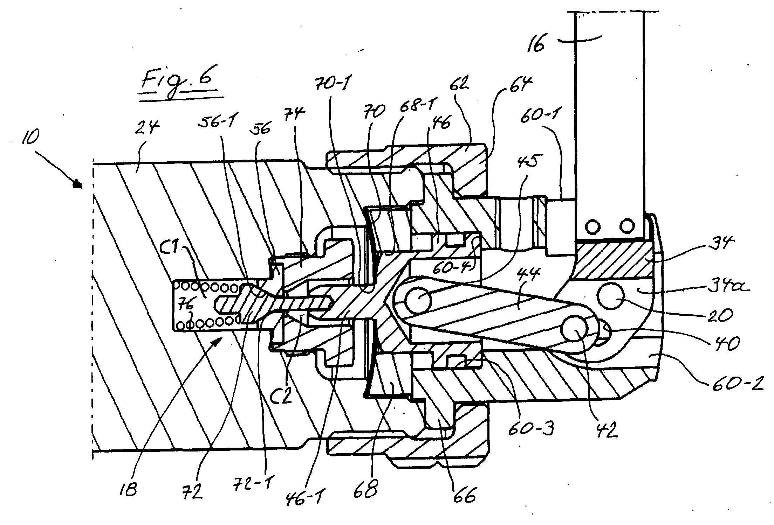

Tel que représenté sur la figure 1 l'ensemble selon l'invention comprend le robinet/détendeur 10 représenté schématiquement et monté dans le col d'une bouteille de gaz B, dont seulement la partie supérieure est représentée. Une coiffe de protection 12 du robinet/détendeur 10 est aussi montée sur le col de la bouteille de gaz B en vue d'entourer et de protéger le robinet/détendeur 10. La coiffe de protection 12 a plusieurs fenêtres ou découpes 14A, 14B, 14C et 14D pour permettre l'accès au robinet/détendeur 10 et l'observation des manomètres (non-représentés) du robinet/détendeur 10. Le robinet/détendeur 10 est pourvu d'un levier de commande 16 qui sert à actionner une vanne ouverte-fermée 18 (voir figures 6, 7 et 8). Ce levier 16 est monté de façon pivotante par une tige de pivot 20 à une pièce de support 60 annulaire attachée au corps 24 du robinet/détendeur 10 au moyen d'un écrou-raccord 62. L'écrou-raccord 62 est prévu à l'une de ses extrémités d'un rebord 64 s'étendant radialement vers l'intérieur et engageant une collerette 66 de la pièce de support 60 en vue de retenir la pièce de support 60 serrée contre le corps 24 du robinet/détendeur 10. A son extrémité reçue dans le corps 24 la pièce de support 60 engage une bague de pression ou un élément de retenue 68. Une membrane d'étanchéité flexible 70, en matière métallique, par exemple en inox, et en forme de calotte sphérique est coincée de façon étanche le long de sa circonférence externe entre une surface sphérique du disque de pression 68 et du corps 24 du robinet/détendeur 10. Le levier de commande 16 peut pivoter dans des rainures axiales 60-1 et 60-2 de la pièce de support 60.

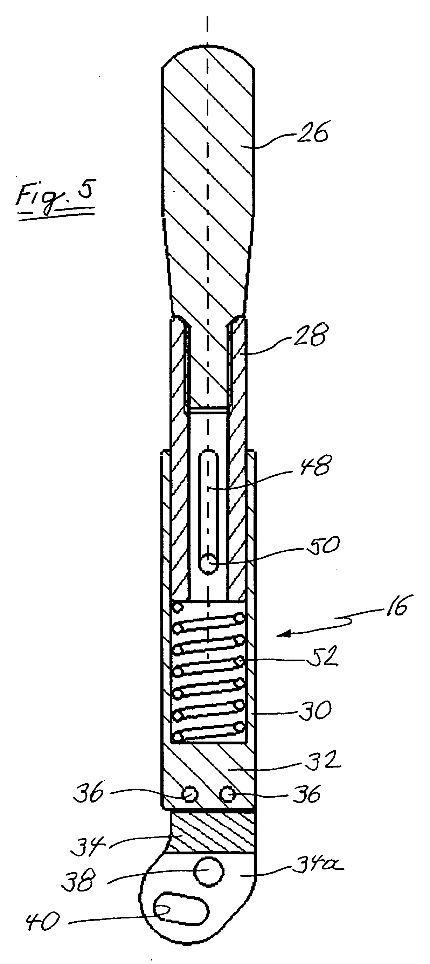

Le levier pivotant 16, voir figure 5, est un levier télescopique comportant une poignée 26 attachée à une première partie tubulaire 28 reçue à coulissement dans une seconde partie tubulaire 30 dont l'extrémité 32 opposée à la poignée 26 est fermée et porte un pied 34 en forme de fourche ayant deux chapes 34a écartées latéralement l'une de l'autre et dont une seule est représentée. Le pied 34 est fixé à la partie tubulaire 30 au moyen de deux goupilles 36. Les deux chapes 34a sont pourvues chacune d'un trou de passage 38 pour la tige de pivot 20 et d'une rainure allongée 40.

Comme représenté sur les figures 6, 7 et 8, un organe de commande ou levier de connexion 44 dont une extrémité est reçue entre les deux chapes 34a porte une goupille 42 engagée dans les rainures 40 des deux chapes 34a. L'autre extrémité du levier 44 est raccordée de façon pivotante au moyen d'une goupille 45 à un poussoir 46. Le poussoir 46 est guidé pour mouvement axial dans un alésage central 68-1 de la bague de pression 68 et dans un contre-alésage 60-3 de la pièce de support 60. Le poussoir 46 est pourvu d'un prolongement axial 46-1 qui s'étend à travers une ouverture centrale 70-1 pratiquée dans la membrane d'étanchéité 70 qui est fixée de façon étanche au poussoir 46 autour de cette ouverture centrale 70-1, par exemple par soudage de la membrane 70 au poussoir 46. Le prolongement axial 46-1 du poussoir 46 porte un élément de vanne 72 à son extrémité libre, qui est pourvu d'une surface conique 72-1 engageant dans sa position fermée une surface conique 56-1 d'une bague de siège 56 maintenue en position dans le corps 24 du robinet/détendeur 10 par une bague de retenue 74 vissée dans le corps 24 et entourant une partie du prolongement 46-1 du poussoir 46 et une partie de l'élément de vanne 72. Un ressort hélicoïdal 76 disposé entre le corps 24 et l'élément de vanne 72 pousse cet élément de vanne 72 vers sa position fermée.

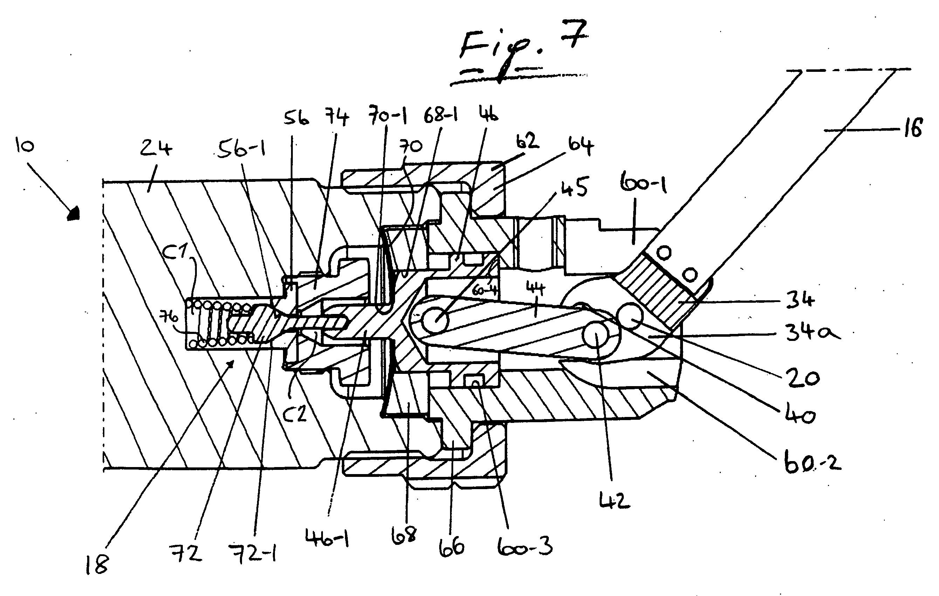

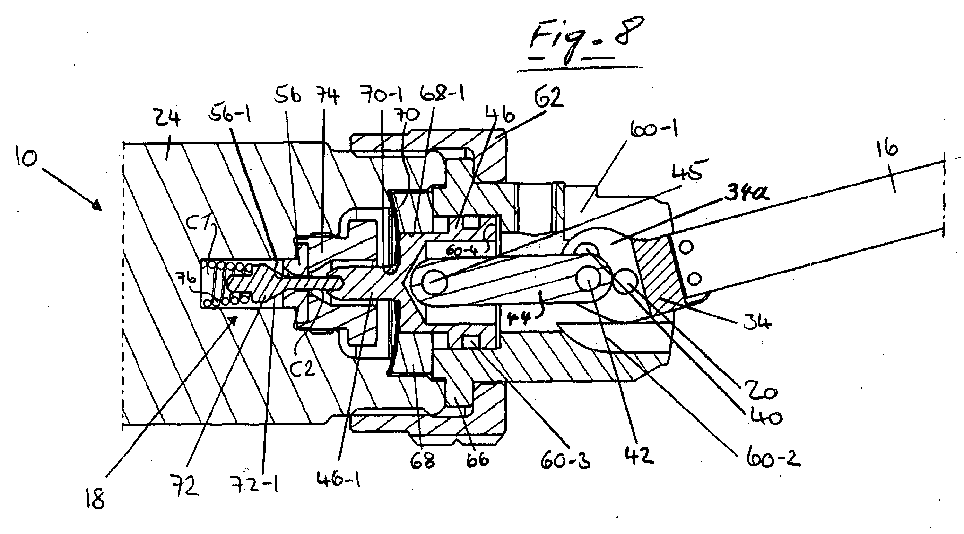

Sur la figure 6 le levier de commande 16 se trouve en position verticale, dans laquelle il est escamoté ou abrité dans la coiffe (non-représentée sur la figure 6). Dans cette position la goupille 42 se trouve à l'extrémité gauche des rainures 40 et l'élément de vanne 72 est en position fermée avec sa surface conique 72-1 engageant la surface conique 56-1 de la bague de siège 56 et l'extrémité droite du poussoir 46 est en contact avec une surface d'arrêt radiale 60-4 prévue à l'extrémité interne du contre-alésage 60-3. Sur la figure 7 le levier de commande 16 a été pivoté vers sa position intermédiaire et la goupille 42 se trouve maintenant à l'extrémité droite des rainures 40, mais la position du poussoir 46 n'a pas changée et l'élément de vanne 72 reste dans sa position fermée. Sur la figure 8 le levier de commande 16 a été pivoté davantage au-delà de la position de la figure 7 en vue d'ouvrir la vanne 18 du robinet/détendeur 10. Le poussoir 46 a maintenant été déplacé vers le côté droit et éloigné de sa surface d'arrêt 60-4 en vue de dégager l'élément de vanne 72 de la bague de siège 56. Le mouvement du poussoir 46 vers le côté droit provoque une déformation de la membrane d'étanchéité élastique 70 qui agit également en tant que ressort assistant le ressort 76 en vue de ramener le poussoir 46 vers sa position initiale ou de départ en contact la surface 60-4 lorsque le levier de commande 16 est pivoté dans le sens inverse en vue de fermer a vanne 18 du robinet/détendeur 10.

Revenant à la figure 5, la première partie tubulaire 28 du levier de commande télescopique 16 est reçue pour mouvement axial à l'intérieur de la seconde partie tubulaire 30. La première partie tubulaire 28 est pourvue d'une fente allongée 48 traversée par une goupille d'arrêt 50 attachée à la seconde partie tubulaire 30. Un ressort de compression hélicoïdal 52 est disposé dans la seconde partie tubulaire 30 et s'appuie de l'un côté sur l'extrémité fermée 32 de la seconde partie tubulaire 30 et de l'autre côté sur la première partie tubulaire 28. Le ressort 52 sert à maintenir le levier de commande télescopique 16 normalement dans une condition à longueur maximale dans laquelle la goupille d'arrêt 50 se trouve à l'extrémité de la fente 48 adjacent au ressort 52. Par l'application d'une force de compression axiale à la poignée 26 du levier télescopique 16 la longueur du levier de commande télescopique 16 peut être réduite par compression du ressort 52 jusqu'à ce que l'extrémité opposée de la fente allongée 48 vient buter contre la goupille d'arrêt 50. Dans cette position raccourcie du levier de commande 16 une plus longue partie de la première partie tubulaire 28, correspondant à la longueur de la fente allongée 48, se trouve à l'intérieur de la seconde partie tubulaire 30.

Comme représenté encore dans les figures 6 et 7, la vanne 18 est normalement poussée par le ressort 76 vers sa position fermée dans laquelle elle est en contact étanche avec le siège 56 et dans laquelle elle coupe la communication entre une chambre d'amont C1 et une chambre d'aval C2 formées dans le corps 24 du robinet/détendeur 10 et communiquant avec un passage d'amont (non-représenté) respectivement avec un passage d'aval (non-représenté) formés dans le corps 24 du robinet/détendeur 10.

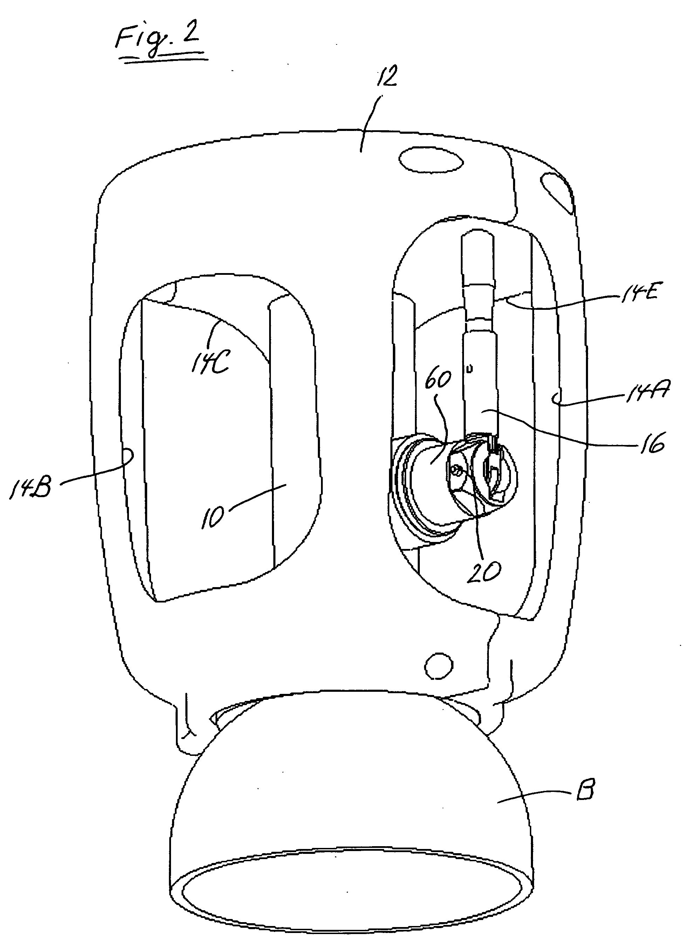

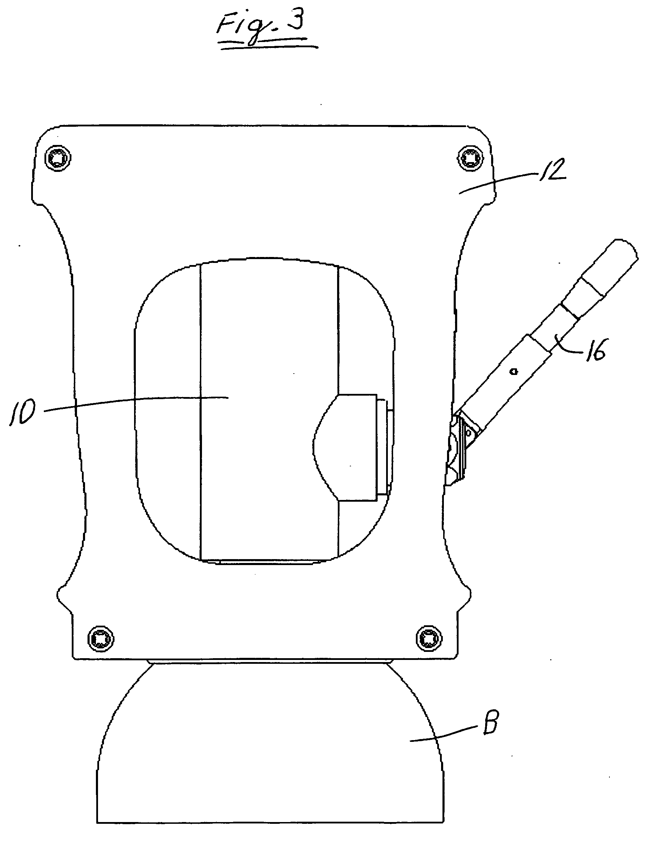

Pour ouvrir la vanne 18 le levier de commande télescopique 16 doit être pivoté de sa position abritée ou escamotée à l'intérieur de la coiffe 12 vers l'extérieur de celle-ci en appliquant simultanément une force de compression axiale au levier 18 en vue de le raccourcir par compression du ressort 52. Pendant le pivotement initial du levier de commande 16 la vanne 18 n'est pas actionnée mais reste en position fermée grâce au raccordement du levier de commande 16 au levier de connexion 44 au moyen du mécanisme de mouvement à vide formé par la goupille 42 et les rainures allongées 40. Pendant cette phase de mouvement initial les rainures 40 se déplacent sur la goupille 42 sans provoquer un mouvement du levier de connexion 44 et par conséquent de la vanne 18. Dans la position verticale du levier de commande 16, représentée sur les figures 1 et 2, dans laquelle il est escamoté à l'intérieur de la coiffe 12 la goupille 42 se trouve à l'extrémité gauche des rainures 40 et à la fin de la phase de mouvement initiale du levier de commande 16 la goupille 42 se trouve à l'extrémité droite des rainures 40. La position du levier de commande 16 après sa phase de pivotement initiale est représentée sur les figures 3 et 7, dans cette position intermédiaire le levier de commande est situé à un angle d'approximativement 30° à 45° par rapport à sa position verticale escamotée à l'intérieur de la coiffe 12. Bien entendu, dès que le levier 16 a été pivoté suffisamment pour que son extrémité supérieure se trouve à l'extérieur de la coiffe 12 la force de compression axiale n'a plus besoin d'être appliquée au levier de commande 16 qui peut reprendre sa longueur maximale sous l'effet du ressort 52.

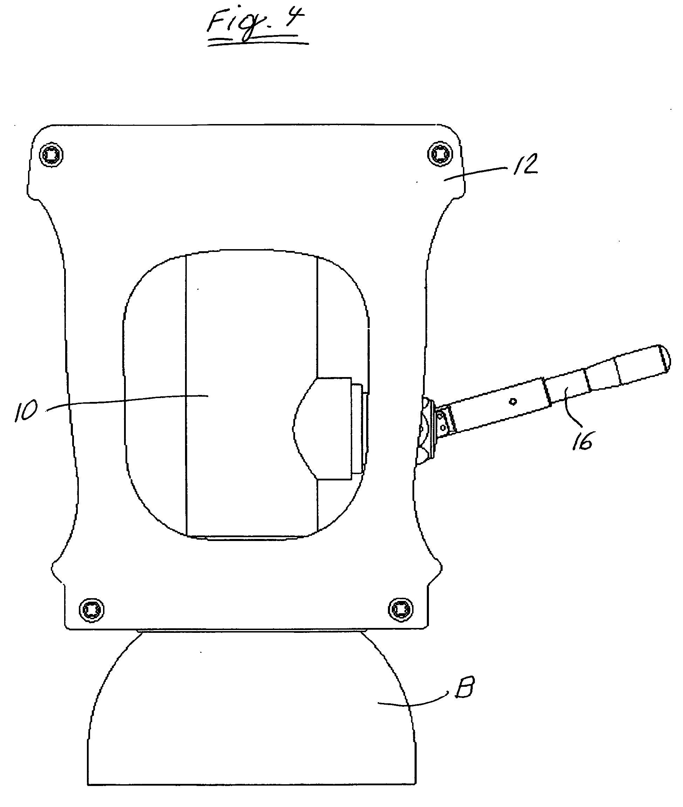

Si le levier est maintenant pivoté davantage au-delà de sa position intermédiaire représentée en figure 3 vers sa position à inclinaison maximale de la figure 4, représentée aussi dans la figure 8, une force est appliquée par le levier 16 à la goupille 42 fixée au levier de connexion 44 en vue de pousser ce levier et par conséquent le poussoir 46 et l'élément de vanne 72 vers le côté gauche pour le dégager de son siège 56 et raccorder la chambre d'amont C1 du robinet/détendeur 10 à la chambre d'aval C2.

Pour fermer la vanne 18 le levier de commande 16 est pivoté vers le haut dans la direction opposée. Pendant le mouvement vers le haut du levier de commande 16 la goupille 42 revient de nouveau vers l'extrémité gauche de la rainure 40 et la vanne 18 est déplacée vers sa position fermée au moyen du levier 16 et aussi par le ressort 76 et la membrane d'étanchéité élastique 70. Bien entendu, pour ramener le levier de commande 16 dans sa position verticale escamotée à l'intérieur des limites de la coiffe 12, représentée sur les figures 1, 2 et 6, la force de compression axiale doit de nouveau être appliquée au levier 16 en vue de raccourcir sa longueur pour le faire passer par la découpe 14A de la coiffe 12 vers l'intérieur de celle-ci.

Par conséquent, le levier de commande 16 se trouvant normalement à l'intérieur de la coiffe 12 ne peut pas être pivoté dans la direction en vue d'ouvrir la vanne 18 par la seule application d'un mouvement au levier 16 en vue de le pivoter, mais une force axiale doit être simultanément appliquée au levier pivotant 16 en vue de raccourcir sa longueur pour pouvoir le pivoter vers l'extérieur de la coiffe 12.

Alors qu'un mode d'exécution préféré de l'invention a été représenté et décrit ci-avant, il est évident aux spécialistes que beaucoup de modifications ou de variations peuvent y être apportées sans pour cela sortir du cadre de l'invention, tel que défini par les revendications annexées.

## Revendications

1. Ensemble comprenant un robinet/détendeur (10) et une coiffe de protection (12) a monter sur le col d'une bouteille de gaz de sorte que la coiffe entoure et protège le robinet/détendeur (10), le robinet/détendeur (10) avant une vanne ouverte-fermée (18) équipée d'un levier de commande (16) pivotant relié à un organe de commande de la vanne et pouvant être abrité à l'intérieur de la coiffe pourvue d'au moins une découpe d'accès ou d'observation, **caractérisé en ce que** le levier de commande (16) est un levier à longueur variable qui peut être raccourci manuellement en vue de le pivoter par la découpe pratiquée dans la coiffe (12) vers une position abritée à l'intérieur de la coiffe (12) et de cette position abritée vers une position dans laquelle il s'étend vers l'extérieur de la coiffe (12) , le levier (16) ayant une longueur maximale à l'état non-raccourcie choisie de sorte que la paroi de la coiffe (12) entourant la découpe empêche le mouvement pivotant du levier (16) vers l'intérieur de la coiffe (12) et vers l'extérieur de celle-ci lorsque le levier de commande (16) est à sa longueur maximale.

2. Ensemble selon la revendication 1, **caractérisé en ce que** le levier de commande (16) est raccordé à l'organe de commande (44) de la vanne (10) du robinet/détendeur 10 par un moyen de mouvement à vide de sorte que le mouvement pivotant du levier de commande (16) pendant une première phase de mouvement du levier (16) de sa position abritée à l'intérieur de la coiffe (12) vers l'extérieur de celle-ci n'actionne pas l'organe de commande (44) de ladite vanne et actionne cet organe de commande (44) lorsque le mouvement pivotant du levier (16) continue.

3. Ensemble selon la revendication 1 ou 2, **caractérisé en ce que** le levier (16) est un levier télescopique équipé d'un ressort (52) en vue de maintenir le levier normalement à sa longueur maximale.

4. Ensemble selon la revendication 1 ou 2, **caractérisé en ce que** le moyen de mouvement à vide comporte une goupille (42) portée par l'organe de commande (44) de la vanne ouverte-fermée (18) ou par un élément solidaire du levier de commande (16) et reçue dans une rainure allongée formée dans l'autre de ces pièces.

5. Ensemble selon la revendication 4, **caractérisé en ce que** l'organe de commande (44) est un levier couple de façon pivotante a un poussoir (46) guidé pour mouvement axial et portant un élément de fermeture (72) mobile de la vanne (18) précitée.

6. Ensemble selon la revendication 5, **caractérisé par** une membrane d'étanchéité flexible (70) de forme annulaire fixé de façon étanche autour de sa circonférence interne au poussoir (46), et dont le bord externe est coincé entre le corps (24) du robinet/détendeur (10) et un élément de retenue (68) de la membrane.

## Patentansprüche

1. Baugruppe bestehend aus einem Ventil/Druckminderer (10) und einer Schutzhaube (12), die am Hals einer Gasflasche zu befestigen ist, damit die Haube den Ventil /Druckminderer (10) umgibt und schützt, wobei der Ventil/Druckminderer (10) ein Auf-Zu-Ventil (18) aufweist, das mit einem schwenkbaren Betätigungshebel (16) versehen ist, der an ein Betätigungselement des Ventiles angeschlossen ist, und zum Schutz in das Innere der Haube beweglich ist, und wobei die Haube mit wenigstens einer Zugangs- oder Sichtausnehmung versehen ist, **dadurch gekennzeichnet, dass** der Betätigungshebel (16) ein Hebel mit variabler Länge ist, der manuell verkürzbar ist, um ihn durch die Ausnehmung in der Haube (12) in die Schutzstellung im Inneren der Haube (12) zu schwenken und aus dieser Schutzstellung in eine Stellung zu schwenken, in welcher er sich aus der Haube (12) nach aussen erstreckt, wobei der Hebel (16) im nicht-verkürzten Zustand eine maximale Länge aufweist, die so ausgewählt ist, damit die Wand der Haube (12), welche die Ausnehmung umgibt, die Schwenkbewegung des Hebels (16) in das Innere der Haube (12) und aus der Haube hinaus verhindert wenn der Betätigungshebel (16) seine maximale Länge aufweist.

2. Baugruppe nach Anspruch 1, **dadurch gekennzeichnet, dass** der Betätigungshebel (16) an das Betätigungselement (44) des Ventiles (10) des Ventil/Druckminderers (10) über eine Einrichtung mit totem Gang angeschlossen ist, damit die Schwenkbewegung des Betätigungshebels während einer ersten Phase der Bewegung des Hebels aus seiner Schutzstellung im Inneren der Haube nach aussen aus der Haube heraus das Betätigungselement des Ventiles nicht betätigt und dieses Betätigungselement (44) betätigt wenn der Hebel (16) weiter verschwenkt wird.

3. Baugruppe nach Anspruch 1 oder 2, **dadurch gekennzeichnet, dass** der Hebel (16) ein Teleskophebel ist, der mit einer Feder (52) versehen ist, um den Hebel normalerweise im Zustand maximaler Länge zu halten.

4. Baugruppe nach Anspruch 1 oder 2, **dadurch gekennzeichnet, dass** die Einrichtung mit totem Gang einen Stift (42) aufweist, der vom Betätigungselement (44) des Auf-Zu-Ventiles (18) oder von einem mit dem Betätigungshebel (16) verbundenen Element getragen ist, und der in einem Längsschlitz aufgenommen ist, der in dem anderen dieser Elemente vorgesehen ist.

5. Baugruppe nach Anspruch 4, **dadurch gekennzeichnet, dass** das Betätigungselement (44) ein Hebel ist, der schwenkbar mit einem Stössel (46) verbunden ist, welcher axial beweglich geführt ist und ein bewegliches Verschlusselement (72) des Ventiles (18) trägt.

6. Baugruppe nach Anspruch 5, **dadurch gekennzeichnet, dass** eine ringförmige, biegsame Dichtungsmembran (70) mit ihrem inneren Umfang dicht mit dem Stössel (46) verbunden ist, und der Aussenrand der Membran zwischen dem Körper (24) des Ventil/Druckminderers (10) und einem Zurückhaltelement (68) der Membran eingespannt ist.

## Claims

1. Assembly comprising a tap/pressure reducer (10) and a protection hood (12) adapted to be mounted on the neck of a gas cylinder so that the hood surrounds and protects the tap/pressure reducer (10), the tap/pressure reducer (10) having an open-closed valve (18) provided with a pivoting control lever (16) connected to an actuating member of the valve and adapted to be sheltered in the interior of the hood provided with at least one access or observation cut-out, **characterized in that** the actuating lever is a variable length lever that is adapted to be manually shortened to permit pivoting of the lever through the cut-out formed in the hood (12) towards a sheltered position in the interior of the hood (12) and from this sheltered position towards a position wherein it extends outwardly from the hood (12), the lever (16) having a maximum length at the non-shortened position selected so that the wall of the hood (12) surrounding the cut-out prevents pivoting movement of the lever (16) towards the interior of the hood (12) and towards the exterior thereof when the actuating lever (16) is at its maximum length.

2. Assembly according to claim 1, **characterized in that** the actuating lever (16) is connected to the actuating member (44) of the valve (10) of the tap/pressure reducer (10) by a lost motion means so that the pivoting movement of the actuating lever (16) during a first phase of the movement of the lever (16) from its sheltered position within the interior of the hood (12) towards the exterior thereof does not actuate the actuating member (44) of said valve and actuates said actuating member (44) when the pivoting movement of the lever (16) continues.

3. Assembly according to claim 1 or 2, **characterized in that** the lever (16) is a telescoping lever provided with a spring (52) to normally maintain the lever at its maximum length.

4. Assembly according to claim 1 or 2, **characterized in that** the lost motion means comprises a pin (42) carried by the actuating member (44) of the open-closed valve (18) or by a member integrally formed with the actuating lever (16) and received in a elongated slot formed in the other of these members.

5. Assembly according to claim 4, **characterized in that** the actuating member (44) is a lever pivotably coupled to a pusher (46) guided for axial movement and carrying a movable closure element (72) of said valve (18).

6. Assembly according to claim 5, **characterized in that** a flexible sealing membrane (70) of annular shape is tightly fixed around its internal circumference to the pusher (46) and whose external edge is clamped between the body (24) of the tap/pressure reducer (10) and a retention element (68) of the membrane.
